(19) Europäisches Patentamt / European Patent Office / Office européen des brevets

(11) EP 2 518 860 B1

(12) **EUROPEAN PATENT SPECIFICATION**

(45) Date of publication and mention
of the grant of the patent:
**15.04.2015 Bulletin 2015/16**

(51) Int Cl.:
*H02J 7/00* (2006.01)    *H01M 10/48* (2006.01)
*H01M 10/44* (2006.01)    *B60L 11/18* (2006.01)
*H01M 10/42* (2006.01)

(21) Application number: **12166053.4**

(22) Date of filing: **27.04.2012**

(54) **Battery cell-balancing method and apparatus**

Batteriezellenausgleichsverfahren und Vorrichtung

Procédé et appareil d'équilibrage de cellule de batterie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.04.2011 US 201113096564**

(43) Date of publication of application:
**31.10.2012 Bulletin 2012/44**

(73) Proprietor: **Datang NXP Semiconductors Co., Ltd.
County Town of Rudong County, Jiangsu
Province (CN)**

(72) Inventor: **Van Lammeren, Johannes Petrus Maria
Redhil, Surrey RH1 1NY (GB)**

(74) Representative: **EP&C
P.O. Box 3241
2280 GE Rijswijk (NL)**

(56) References cited:
**US-A1- 2005 269 988    US-B2- 7 825 638**

**Description**

In (hybrid) electric vehicles, large numbers of series-connected batteries are used to generate a high voltage to drive the motor. To maximize the life time of the battery cells (and drive range of the car), the State of Charge (SoC) should be maintained at an equivalent level between the battery cells. The SoC refers to the percentage of the charge that is left in the cell, with 100% being the charge in the cell the last time it was fully charged. When the battery cells in a series-connected string are charged they all receive the same level of current. Thus, in principle the cells should be at the same SoC after charging. There are, however, mismatches between battery cells, such as susceptibility to leakage current and efficiency of converting current into chemically stored energy. Therefore the SoCs of the battery cells will not be the same after charging. If no action is taken, the differences will grow with each charge/discharge cycle, leading to a reduction in battery life.

Such differences in SoCs can cause a battery cell to be over-discharged during use or over-charged in the charging process. For some battery chemistries, such as lithium ion-based batteries, over-charging or over-discharging may result in damage to the battery cell. For example, a fully charged lithium ion cell often has a charged voltage that is close to the electrolyte breakdown threshold voltage at which damage to the cell may occur. If a cell is over-charged to the point where the voltage exceeds the electrolyte breakdown threshold voltage, the cell may be damaged. To prevent such damage, battery packs of series coupled cells often include cell-balancing circuits that equalize the SoCs between the series-coupled cells. By balancing the SoCs of the cells during use or charging, cells may be prevented from becoming over-charged or over-discharged.

Cell-balancing circuits may be generalized into two categories: *passive* and *active.* In passive cell-balancing circuits, energy is drawn from a cell having a higher SoC and is dissipated as heat though a resistive circuit. While charging, current may be also selectively routed around a cell having a higher SoC, via the resistive circuit, to avoid further charging of the cell. Passive cell-balancing circuits may also be referred to as *dissipative* cell-balancing circuits and such terms are used interchangeably herein. Dissipative cell-balancing circuits are hardware efficient, generally requiring only a resistor and a transistor for each cell, but typically waste energy in the form of heat.

An active cell-balancing circuit transfers energy from a cell having a higher SoC to a cell having a lower SoC. Typically, the transfer of energy between cells is performed indirectly through an energy storage element such as a capacitor or an inductor. Active cell-balancing circuits may also be referred to as *non-dissipative* cell-balancing circuits and such terms are used interchangeably herein. Active cell-balancing circuits are energy efficient but are generally more expensive due to the cost of inductors and/or capacitors and the need for extra wiring to transfer energy between the cells.

As the number of cells to be balanced by an active balancing circuit is increased, the length and number of wires needed to interconnect the cells also increases. This interconnection wiring is undesirable because it complicates the construction of a battery pack and poses a potential safety hazard as the interconnection wiring may carry high voltages.

US2005/0269988 (cf. the preamble of claim 1) discloses an energy storage arrangement with modules having cell balancing between the cells, and also having balancing between the modules. US 7 825 638 discloses a cell balancing approach using capacitive circuits.

The invention provides an energy cell storage arrangement as defined in claim 1.

One or more embodiments may address one or more of the above issues.

In one embodiment, an energy storage cell arrangement is provided. The arrangement includes a plurality of battery cells coupled in series and a plurality of first circuits coupled to respective subsets of the plurality of cells. Each first circuit is configured to transfer energy between cells of the respective subset of cells for balancing stored energy of the respective subset of cells. A second circuit is coupled to the subsets of the plurality of cells. The second circuit includes a plurality of switchable resistive paths, each resistive path switchably coupled in parallel with a respective one of the subsets of the plurality of cells for balancing stored energy between the subsets of the plurality of cells.

In another embodiment, a circuit arrangement is provided for managing stored energy of a battery having a plurality of cells coupled in series. The arrangement includes a plurality of non-dissipative cell-balancing circuits each coupled to a respective subset of the plurality of cells and configured to balance stored energy between cells in the subset. A dissipative cell-balancing circuit is coupled to each of the non-dissipative cell-balancing circuits and is configured to balance stored energy between the respective subsets of the plurality of cells.

In yet another embodiment a battery module is provided. The battery module includes a plurality of battery cells coupled in series and a cell-balancing circuit coupled to each of the plurality of cells. The cell-balancing circuit is configured to redistribute stored energy between the cells to balance stored energy of the cells. A dissipative circuit is coupled to a terminal at each end of the series of plurality of cells and is configured to dissipate energy of all of the plurality of cells coupled in series in a resistive closed loop in response to a control signal.

The above discussion is not intended to describe each embodiment or every implementation. Various example embodiments may be more completely understood in consideration of the following detailed description in connection with the accompanying drawings, in which:

FIG. 1 shows an example battery implementing a hybrid cell-balancing architecture;
FIG. 2 illustrates an example of cell-balancing with a two-tier hierarchical arrangement;
FIG. 3 shows distribution of State of Charge (SoC) of an example simulation before and after cell-balancing;
FIG. 4 illustrates the distribution of differences between the average SoC and the SoC of the lowest-charged cell before and after the active intra-module cell-balancing represented in FIG. 3;
FIG. 5 illustrates the energy savings of the active intra-module cell-balancing represented in FIG. 3;
FIG. 6 shows an example three-level hierarchical arrangement of battery cells;
FIG. 7 shows an example battery implementing a hybrid cell-balancing architecture using the three-tier hierarchical arrangement shown in FIG. 6;
FIG. 8 shows an example implementation of a resistive-type passive cell-balancing circuit;
FIG. 9 shows an example implementation of an inductive-type active cell-balancing circuit; and
FIG. 10 shows an example implementation of a capacitive-type active cell-balancing circuit.

While the disclosure is amenable to various modifications and alternative forms, examples thereof have been shown by way of example in the drawings and will be described in detail. It should be understood, however, that the intention is not to limit the disclosure to the particular embodiments shown and/or described. On the contrary, the intention is to cover all modifications, equivalents, and alternatives falling within the spirit and scope of the disclosure.

In one or more embodiments, a battery pack is implemented with a hierarchical arrangement of both passive and active cell-balancing circuits. In one embodiment, a plurality of series-coupled cells in a battery pack are sub-divided into multiple subsets of cells and arranged into a hierarchy of cell subsets and balancing circuits. On a lower level of the hierarchy, energy between cells in each subset is balanced using respective active cell-balancing circuits. On a top level of the hierarchy, energy is balanced between the subsets with a passive cell-balancing circuit.

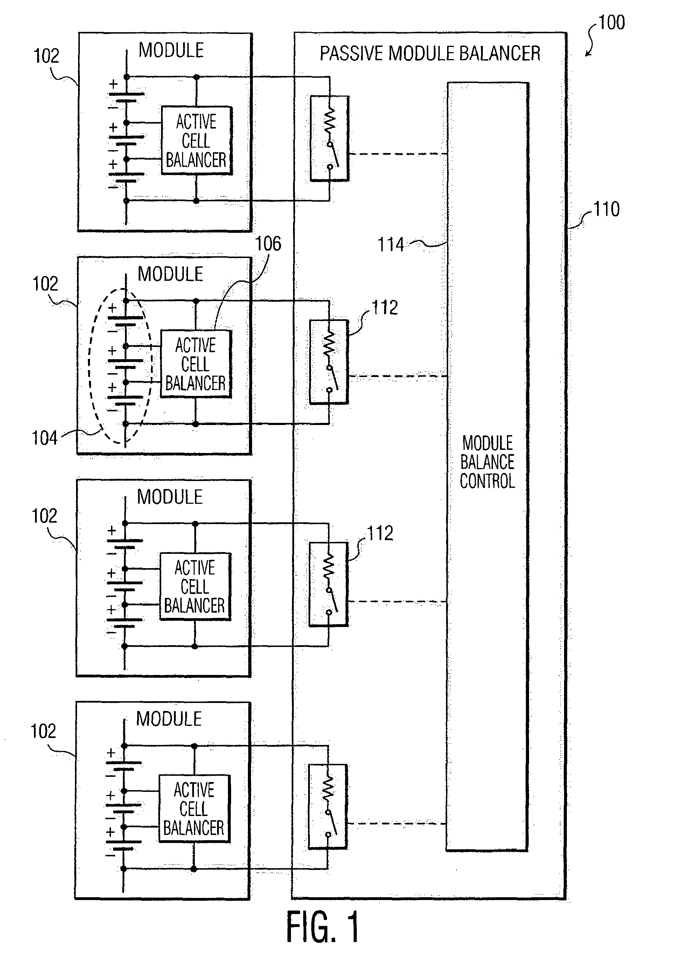

**FIG. 1** shows an example battery implementing a hybrid cell-balancing architecture. In this example, a plurality of series-coupled battery cells and balancing circuits of a battery pack 100 are organized into a two-tier hierarchy. A plurality of battery cells is subdivided into a number of subsets 104 of battery cells. For ease of reference, each subset may be referred to as a *battery module.* On a lower level of the hierarchy, intra-module cell-balancing is performed with active cell-balancing circuitry, and on a top level of the hierarchy, inter-module balancing is performed with passive cell-balancing circuitry. In addition to the subset of cells 104, each module 102 includes an active cell-balancing circuit 106 configured to balance energy between cells in the subset 104. A passive module-balancing circuit 110 is coupled to the modules 102 and is configured to balance energy between the modules. The passive balancing circuit includes a plurality of resistive paths 112, each of which may be switchably coupled in parallel with a respective module 102. A module balance control circuit 114 is configured to determine the SoC of each module and control the switching of the resistive paths 112 to balance energy between the plurality of modules 102.

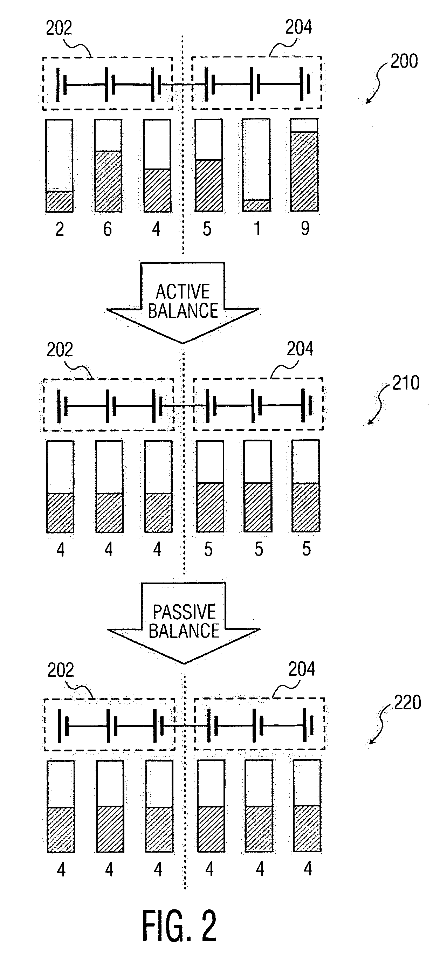

**FIG. 2** illustrates an example of cell-balancing with a two-tier hierarchy. In this example, six series-coupled cells are arranged into two modules 202 and 204, each containing a subset of 3 battery cells. State 200 shows the modules 202 and 204 in an unbalanced state. A respective bar below each cell graphically indicates a state of charge (SoC) with a numeric value indicated below each bar. State 210 illustrates the SoC after the cells in each of modules 202 and 204 have been balanced with active cell-balancing circuitry. As a result of the cell-balancing, each cell in module 202 has the same SoC value of 4, and each cell in module 204 has the same SoC value of 5.

State 220 illustrates a fully balanced state after energy between modules is balanced using passive balancing circuitry. As discussed above, in passive balancing, energy is dissipated from cells having higher SoCs until the cells have the same SoC as the cell with the lowest SoC. Similarly, energy is dissipated from process module 204, having the highest SoC, until the module has the same state of charge as module 202. As a result of the passive balancing, each cell in both of the modules has the same SoC value of 4.

SoC values used in the above example may not be indicative of actual values encountered in practice. Furthermore, passive balancing is illustrated as being performed after active balancing is completed. In practice, the inter-module passive balancing may be performed concurrently with the intra-module active balancing based on an average state of charge of the module.

The hybrid cell-balancing system illustrated in FIG. 1 exhibits the high balancing efficiency of active cell-balancing circuits while reducing circuit complexity and cost. The power efficiency of the balancing process is much higher than that of a completely passive cell-balancing circuit and is close to that exhibited by active cell-balancing. As an illustrative example, if a completely passive cell-balancing were used to balance the example unbalanced state 200 depicted in FIG. 2, energy would be dissipated from the cells until all cells have a SoC of 1, *i.e.,* the lowest state of charge in the unbalanced state 200. If a pure active cell-balancing system were used, each cell would be expected to have a resulting SoC value of 4.5, *i.e.,* the overall average SoC of all cells.

Due to the simplicity of passive balancing circuits, passive inter-module balancing can be implemented with little additional circuitry. Because passive inter-module balancing circuitry does not require interconnections between all the modules, the number of interconnection circuits and the number of terminals on each of the modules is reduced, resulting in fewer and cheaper components and less heat that must be extracted from the battery pack. In contrast, if modules are interconnected to implement active cell-balancing circuitry between modules, long high-voltage wires used to interconnect the modules may pose safety concerns. By reducing the number of interconnections, the overall cost of balancing circuitry may be significantly reduced and safety is improved.

By implementing active cell-balancing on an intra-modular level and passive cell-balancing at an inter-modular level, efficiencies close to that exhibited by active balancing can be achieved at substantially reduced implementation costs. The efficiency of the hybrid balancing system may be illustrated by a statistical analysis.

Assuming the capacitances of all cells are equal, then the cell voltage becomes a linear function of the SoC.

$$V_{cell} = \alpha + \beta \cdot SoC$$

For simplicity, the stored energy in each cell is defined as:

$$E_{cell} = V_{cell}^2$$

Using this simplified definition of Energy, the average energy of the cells becomes:

$$E_{av} = \frac{1}{N} \sum_{i=1}^{N} V_i^2$$

As a measure of how much energy is saved with hybrid inductive-resistive balancing in comparison to pure resistive balancing, an Energy Saving Factor (ESF) is defined using the average energy of the cells before balancing and the lowest energy of the cells after balancing. For ease of explanation, it is assumed that the battery pack of N cells consists of M modules of C cells. The ESF is defined as:

$$ESF = \frac{E_{av,b} - E_{min,b}}{E_{av,b} - E_{min,ind}} * \frac{M}{M-1} * \frac{N-1}{N}$$

where $E_{av,b}$ is the average energy of the cells before balancing, $E_{min,b}$ is the energy of the lowest charged cell before inductive balancing, and $E_{min,ind}$ is the energy of the lowest charged cell after inductive balancing.

It is noted that the ESF is a statistical factor reflecting the ratio of the energy, not the voltage of the cells. The ESF given above is the average energy saving factor if a large number of batteries is observed. In practice, a particular battery pack may have an ESF that is greater than or less than the ideal statistical calculation.

Using ESF to model balancing efficiency, cell-balancing is simulated for 100,000 battery packs having various SoC configurations. In this simulation, each battery pack consisted of six modules of sixteen cells per module. The hybrid cell-balancing shown in FIG. 1 achieved the average SoC of the cells in the packs was chosen 95%, with a one-sigma spread of 1.7.

**Table 1** shows the average energy saving factor (ESF$_{av}$) for various SoC configurations encountered in the simulations on 100,000 battery packs. The average ESF is 10.9 with an ideal lossless inductive balancer. Even if the balancer has an efficiency of only 80%, the average ESF is still 5.0. Therefore, even if the efficiency of the active cell-balancing is not great, a significant amount of energy is saved in comparison to balancing implemented using a completely passive cell-balancing system.

*Table 1*

|  | ESF$_{av}$ | end SoC | remark |
|---|---|---|---|
| ideal Gaussian, $\eta_{ind}$=1 | 10.9 | 94.5 | SoCnom = 95, limit is $3\sigma$ = 5 |

(continued)

|  | ESF$_{av}$ | end SoC | remark |
|---|---|---|---|
| ideal Gaussian, $\eta_{ind}$=0.9 | 6.9 | 94.1 | SoCnom = 95, limit is 3$\sigma$ = 5 |
| ideal Gaussian, $\eta_{ind}$=0.8 | 5.0 | 94.0 | SoCnom = 95, limit is 3$\sigma$ = 5 |
| ideal Gaussian, resistive balancer | 1.0 | 90.8 | SoCnom = 95, limit is 3$\sigma$ = 5 |
| 1 module w/ low SoC in all cells | 1.0 | 90.0 | 5 modules with all cells SoC > 90 1 module with all cells SoC = 90 |

As indicated in the last listing of Table 1, if a battery pack includes a module in which all cells of the module are bad, then little to no advantage may be provided by hybrid cell-balancing architecture over a completely passive approach. However, this represents a worst-case scenario and is unlikely to occur. The efficiency of the hybrid balancing architecture can never be lower than the efficiency of a completely passive cell-balancing system. The minimum ESF found in the simulation of 100,000 packs is 2.5.

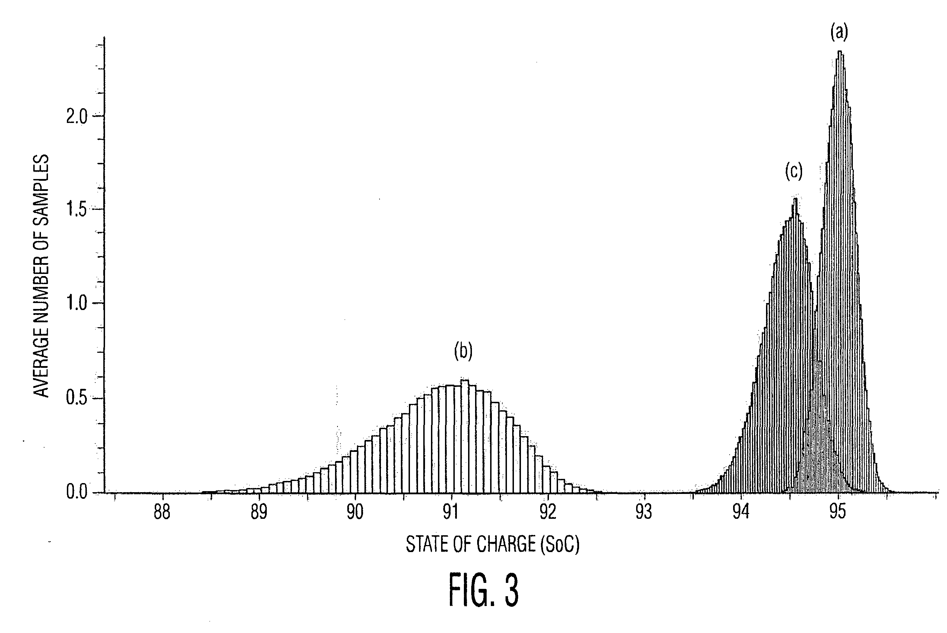

FIG. 3 shows an example distribution of SoCs before and after cell-balancing. The three illustrated curves depict the average distribution of SoCs among cells of a battery pack over 100,000 simulations with various starting SoC distributions. Curve (a) shows the average SoC distribution of cells in the battery pack prior to balancing. Curve (b) shows the average distribution of the SoCs of the cells with the lowest-energy before intra-module active balancing, and curve (c) shows the distribution of the SoCs of the cells with the lowest-energy after intra-module active balancing.

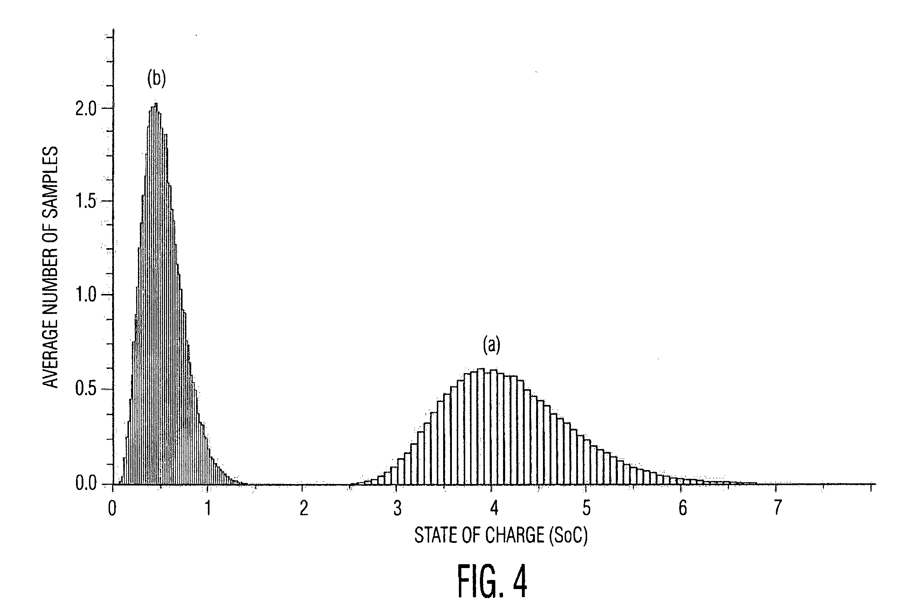

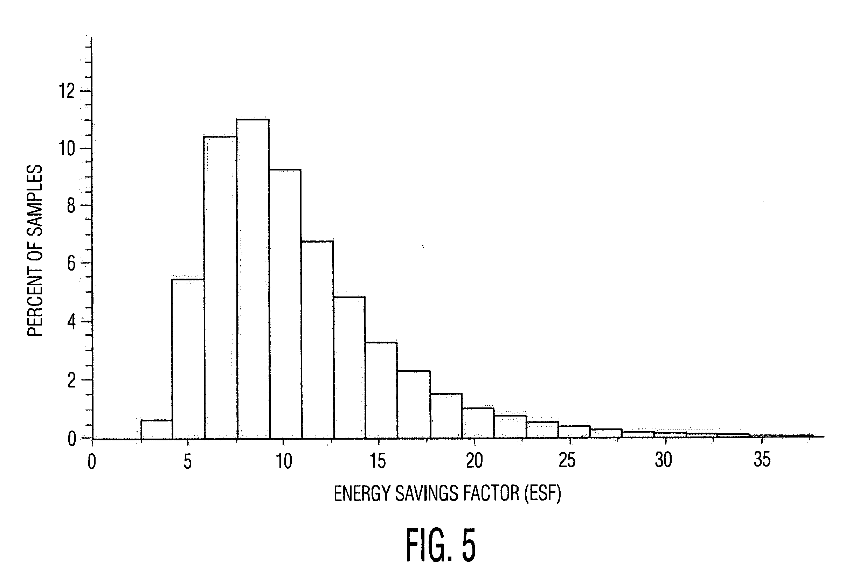

FIG. 4 illustrates the distribution of differences between the average SoC and the SoC of the lowest-charged cell before and after the active intra-module cell-balancing represented in FIG. 3. Curve (a) illustrates the difference between the average SoC and the lowest SoC prior to the active intra-module cell-balancing represented in FIG. 3. Curve (b) illustrates the difference between the average SoC and the lowest SoC after the active intra-module cell-balancing represented in FIG. 3. It is appreciated that, after active intra-module balancing, the difference between the cell with the lowest SoC and the average SoC of all the cells shown in curve (b) is much lower in comparison to curve (a) showing the difference prior to active intra-module balancing. The ratio of the peaks of the distributions is roughly 8:1 (i.e., 0.5 : 4 SoC). FIG. 5 illustrates the energy savings of the active intra-module balancing represented in FIG. 3. As shown, the average ESF is higher than the differences illustrated in FIG. 4 due to the fact that the distributions of the pre/post balancing SoCs are not perfectly Gaussian, but rather may be somewhat skewed as shown in FIG. 5. In this example, the ESF has an average value of 10.9.

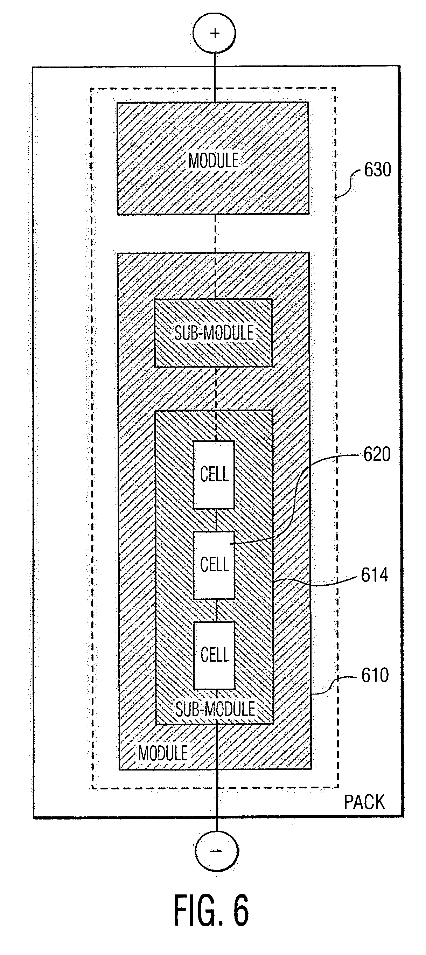

In the above examples, the series-coupled battery cells are arranged in a two-tier hierarchy with active balancing performed on the lower intra-module level and passive balancing performed on the top inter-module level. However, it is recognized that cells may be arranged in a hierarchy having a greater number of tiers as well. For example, FIG. 6 shows an example three-level hierarchical arrangement of battery cells. In this example, a plurality of series-coupled battery cells 620 is arranged in a number of subsets, which may be referred to as modules 610. Battery cells of each module 610 are arranged in further subsets, which may be referred to as sub-modules 614. For ease of explanation, the examples and embodiments are primarily described herein with reference to a battery pack where all cells are coupled in series as one chain of cells, hereinafter referred to as a *section* 630. It is recognized that multiple sections may be connected in parallel (not shown), with cell-balancing of each section performed independent of other sections.

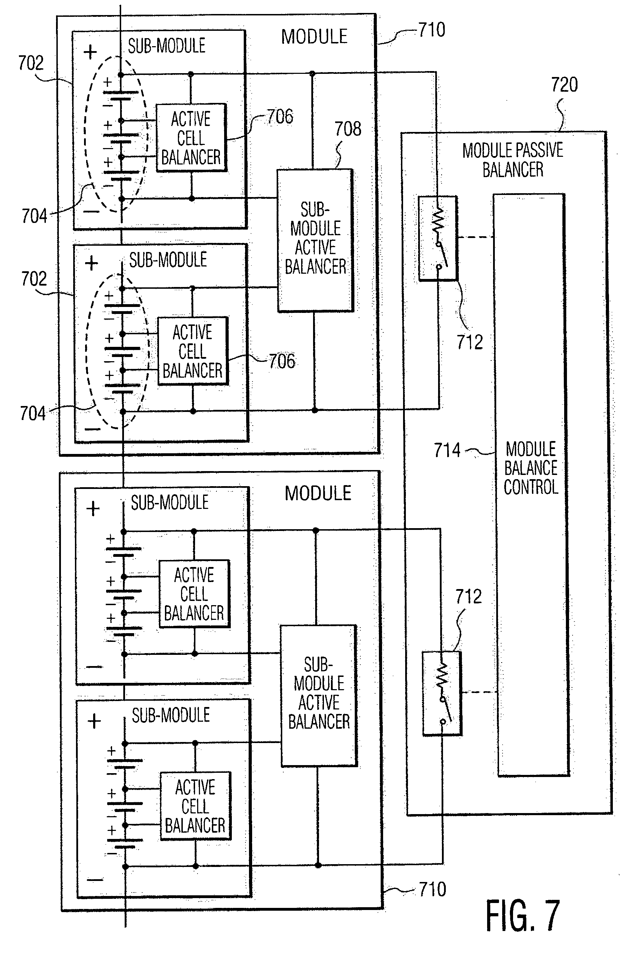

FIG. 7 shows an example circuit implementing the cell-balancing using the example three-level hierarchy of cells depicted in FIG. 6. At the lowest hierarchical level, a further subset 704 of battery cells is contained in a sub-module 702, and the cells are balanced (i.e., intra-sub-modular balancing) using a respective active cell-balancing circuit 706.

At the next higher level in the hierarchical arrangement, multiple sub-modules 702 are coupled in series to form modules 710. Each module includes a sub-module active balancing circuit 708 that is coupled to the sub-modules 702 included in the respective module 710. The sub-module active balancing circuit 708 is configured to balance energy between the sub-modules 702 included in the module 710 (i.e. intra-module, inter-sub-module balancing). At the top level in the hierarchical arrangement, energy is balanced between modules using an inter-module passive balancing circuit 720. The inter-module balancing circuit 720 is coupled to each module 712 and is configured to balance energy between the modules (i.e., inter-module cell-balancing). The inter-module passive balancing circuit 720 includes a plurality of resistive paths 712 that may be switchably coupled in parallel with respective modules 710. A module balance control circuit 714 is configured to determine the SoC of each module and control the switching of the resistive paths 712 to balance energy between the plurality of modules 710.

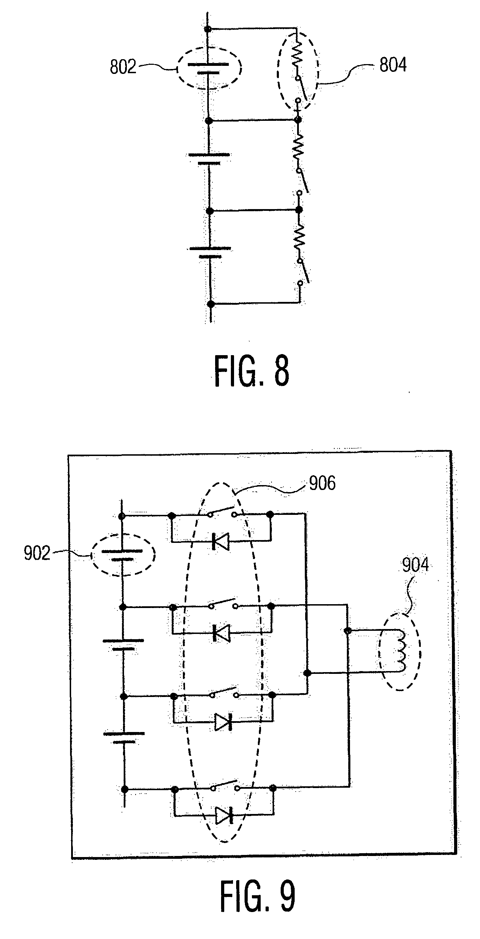

The balancing circuits in the embodiments and examples are primarily described herein as either active or passive cell-balancing circuits. FIGs. 9-10 show example circuits that may be used to implement active and passive cell-balancing circuits. FIG. 8 shows a circuit diagram of an example implementation of a resistive-type passive cell-balancing circuit. In this implementation, each cell 802 is selectably connected in parallel with a resistive path 804. The resistive path includes a switch that may be engaged to couple a resistor in the path.

**FIG. 9** shows a circuit diagram of an example implementation of an inductive-type active cell-balancing circuit. In this implementation, an inductor 904 is used to store and transfer energy between a plurality of battery cells 902. The battery cells are selectably coupled to an inductor 904 via a switch matrix 906. To transfer energy from a first cell to a second cell, the first one of the cells 902 is coupled to the inductor 904 with a first polarity by the switch matrix 906. The current in the inductor will rise with time. After a predetermined amount of time, the switch matrix 906 disconnects the first cell and connects a second cell to the inductor with a second polarity opposite the first. Because the current in the inductor cannot instantly change, a current will be passed though the second cell, charging the second cell, until the current has decayed to (nearly) zero. In this example implementation, the switch matrix 906, is capable of transferring energy from an odd-numbered cell in a series-coupled arrangement of cells to an even numbered cell of the series-coupled arrangement, and vice versa. In another implementation, the switch matrix 906 may be implemented to transfer energy from any cell to any other cell via inductor 904.

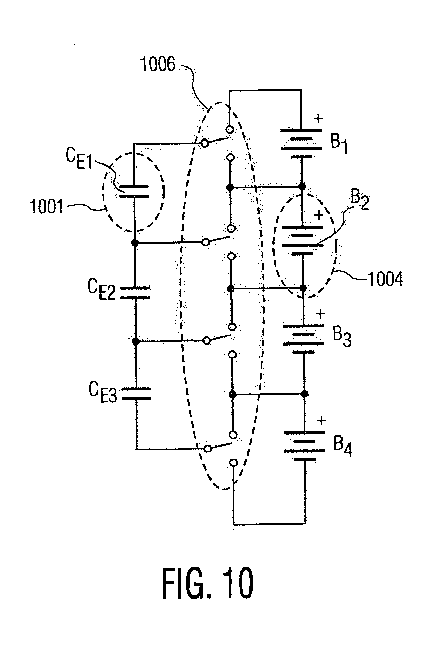

It is recognized that other circuit components, other than inductors may also be used to for temporary storage of energy during energy transfer. Other suitable circuit components include capacitors, transformers, etc. For example, **FIG. 10** shows a circuit diagram of an example implementation of an active cell-balancing circuit implemented with capacitors to store and transfer energy. This type of active balancing circuit is referred to as a capacitive-type active cell-balancing circuit as used herein. One or more of the battery cells 1001 having a higher SoC are selectably coupled to one or more capacitors 1004 via a switch matrix 1006. As a result of the coupling, energy is transferred from the one or more cells to the one or more capacitors. The switch matrix can then couple a cell having a lower SoC to the one or more charged capacitors to transfer energy from the capacitors to the cell. In this implementation, switch matrix 1006 is configured to transfer energy between adjacent ones of the battery cells 1001 by alternately coupling a capacitor to one or the other of the adjacent battery cells. If the capacitors are switched between the adjacent cells often enough, the charges in the cells will be equalized.

In addition to the example circuits described above, it is recognized that the embodiments described herein may be implemented using a number of other active and passive cell circuits as well. Based upon the above discussion and illustrations, those skilled in the art will readily recognize that various modifications and changes may be made within the scope of the claims.

**Claims**

**1.**   An energy storage cell arrangement, comprising:

a plurality of battery cells (104) coupled in series;
a plurality of active cell-balancing first circuits (106), each first circuit coupled to a respective subset of the plurality of cells and configured to transfer energy between cells of the respective subset of cells for balancing stored energy of the respective subset of cells; and
a second circuit (110) coupled to the subsets of the plurality of cells,
**characterized in that** the second circuit comprises a passive balancing circuit including a plurality of switchable resistive paths (112), each resistive path switchably coupled in parallel with a respective one of the subsets of the plurality of cells (104) for balancing stored energy between the subsets of the plurality of cells.

**2.**   The energy storage cell arrangement of claim 1, wherein the plurality of first circuits (106) are inductive-type circuits that balance stored energy between cells of the respective subset of cells.

**3.**   The energy storage cell arrangement of claim 1, wherein the plurality of first circuits (106) are capacitive-type circuits that balance stored energy between cells of the respective subset of cells.

**4.**   The energy storage cell arrangement of claim 1, wherein each of the plurality of first circuits (106) includes:

a set of first sub-circuits (706), each sub-circuit (706) of the set coupled to a respective further subset (702) of the respective subset of the plurality of cells corresponding to the first circuit, and each sub-circuit (706) configured to transfer energy between cells of the respective further subset (702) to balance stored energy between the cells of the respective further subset; and
a second sub-circuit (708) coupled to each of the first sub-circuits (706) and configured to transfer energy between the further subsets of cells to balance stored energy between the further subsets of cells.

5. The energy storage cell arrangement of claim 4, wherein:

the first sub-circuits (706) are a first type of circuit that balances stored energy between the cells;
the second sub-circuit (708) is a second type of circuit that balances stored energy between the further subsets of cells; and
one type of the first and second types of balancing circuits is a capacitive-type, and the other type of the first and second types is an inductive-type.

6. The energy storage cell arrangement of claim 4, wherein the first sub-circuits (706) and the second sub-circuit (708) are capacitive-type circuits that balance stored energy between cells.

7. The energy storage cell arrangement of claim 4, wherein the first sub-circuits (706) and the second sub-circuit (708) are inductive-type circuits that balance stored energy between cells.

8. The energy storage cell arrangement of claim 1, wherein each resistive path (112) switchably coupled in parallel with a respective one of the subsets (102) of the plurality of cells does not contain other ones of the subsets on the resistive path.

9. A battery module, comprising an energy storage cell arrangement as claimed in any preceding claim, wherein the battery module is configured to receive a control signal from an external balancing control circuit coupled to a plurality of like battery modules.

10. The battery module of claim 9, wherein the cell-balancing circuit is configured to generate the control signal according to stored energy of the battery module relative to stored energy of another like module.

**Patentansprüche**

1. Energiespeicherzellenanordnung umfassend:

mehrere Batteriezellen (104), welche in Reihe gekoppelt sind;
mehrere aktive zellenausgleichende erste Schaltkreise (106), wobei jeder erste Schaltkreis mit einer entsprechenden Teilmenge der mehreren Zellen gekoppelt ist und ausgestaltet ist, Energie zwischen Zellen der entsprechenden Teilmenge von Zellen zum Ausgleichen gespeicherter Energie der entsprechenden Teilmenge von Zellen zu übertragen; und
einen zweiten Schaltkreis (110), welcher mit den Teilmengen der mehreren Zellen gekoppelt ist, **dadurch gekennzeichnet, dass** der zweite Schaltkreis einen passiven ausgleichenden Schaltkreis umfasst, welcher mehrere schaltbare Widerstandspfade (112) aufweist, wobei jeder Widerstandspfad schaltbar parallel zu einer entsprechenden der Teilmengen der mehreren Zellen (104) zum Ausgleichen gespeicherter Energie zwischen den Teilmengen der mehreren Zellen gekoppelt ist.

2. Energiespeicherzellenanordnung nach Anspruch 1, wobei die mehreren ersten Schaltkreise (106) induktive Schaltkreise sind, welche gespeicherte Energie zwischen Zellen der entsprechenden Teilmenge von Zellen ausgleichen.

3. Energiespeicherzellenanordnung nach Anspruch 1, wobei die mehreren ersten Schaltkreise (106) kapazitive Schaltkreise sind, welche gespeicherte Energie zwischen Zellen der entsprechenden Teilmenge von Zellen ausgleichen.

4. Energiespeicherzellenanordnung nach Anspruch 1, wobei jeder der mehreren ersten Schaltkreise (106) aufweist:

eine Menge von ersten Teilschaltkreisen (706), wobei jeder Teilschaltkreis (706) der Menge mit einer entsprechenden weiteren Teilmenge (702) der entsprechenden Teilmenge der mehreren dem ersten Schaltkreis entsprechenden Zellen gekoppelt ist, und wobei jeder Teilschaltkreis (706) ausgestaltet ist, Energie zwischen Zellen der entsprechenden weiteren Teilmenge (702) zu übertragen, um gespeicherte Energie zwischen den Zellen der entsprechenden weiteren Teilmenge auszugleichen; und
einen zweiten Teilschaltkreis (708), welcher mit jedem der ersten Teilschaltkreise (706) gekoppelt ist und ausgestaltet ist, Energie zwischen den weiteren Teilmengen der Zellen zu übertragen, um gespeicherte Energie zwischen den weiteren Teilmengen von Zellen auszugleichen.

**5.** Energiespeicherzellenanordnung nach Anspruch 4, wobei:

die ersten Teilschaltkreise (706) ein erster Typ von Schaltkreis sind, welcher gespeicherte Energie zwischen den Zellen ausgleicht;
der zweite Teilschaltkreis (708) ein zweiter Typ von Schaltkreis ist, welcher gespeicherte Energie zwischen den weiteren Teilmengen von Zellen ausgleicht; und
ein Typ von dem ersten und zweiten Typ von ausgleichenden Schaltkreisen ein kapazitiver Typ ist und der andere Typ von dem ersten und zweiten Typ ein induktiver Typ ist.

**6.** Energiespeicherzellenanordnung nach Anspruch 4, wobei die ersten Teilschaltkreise (706) und der zweite Teilschaltkreis (708) kapazitive Schaltkreise sind, welche gespeicherte Energie zwischen Zellen ausgleichen.

**7.** Energiespeicherzellenanordnung nach Anspruch 4, wobei die ersten Teilschaltkreise (706) und der zweite Teilschaltkreis (708) induktive Schaltkreise sind, welche gespeicherte Energie zwischen Zellen ausgleichen.

**8.** Energiespeicherzellenanordnung nach Anspruch 1, wobei jeder Widerstandspfad (112), welcher schaltbar parallel zu einer entsprechenden der Teilmengen (102) der mehreren Zellen gekoppelt ist, keine anderen der Teilmengen an dem Widerstandspfad enthält.

**9.** Batteriemodul umfassend eine Energiespeicherzellenanordnung nach einem der vorhergehenden Ansprüche, wobei das Batteriemodul ausgestaltet ist, ein Steuersignal von einem externen ausgleichenden Steuerschaltkreis zu empfangen, welcher mit mehreren gleichen Batteriemodulen gekoppelt ist.

**10.** Batteriemodul nach Anspruch 9, wobei der zellenausgleichende Schaltkreis ausgestaltet ist, das Steuersignal gemäß gespeicherter Energie des Batteriemoduls relativ zu gespeicherter Energie eines anderen gleichen Moduls zu erzeugen.

## Revendications

**1.** Agencement de cellules de stockage d'énergie, comprenant :

une pluralité de cellules de batterie (104) couplées en série ;
une pluralité de premiers circuits d'équilibrage de cellules actif (106), chaque premier circuit étant couplé à un sous-ensemble respectif de la pluralité de cellules et configuré pour transférer l'énergie entre les cellules du sous-ensemble respectif de cellules pour équilibrer l'énergie stockée du sous-ensemble respectif de cellules ; et
un deuxième circuit (110) couplé aux sous-ensembles de la pluralité de cellules,
**caractérisé en ce que** le deuxième circuit comprend un circuit d'équilibrage passif comprenant une pluralité de trajets résistifs pouvant être commutés (112), chaque trajet résistif étant couplé de manière commutable en parallèle avec l'un respectifs des sous-ensembles de la pluralité de cellules (104) pour équilibrer l'énergie stockée entre les sous-ensembles de la pluralité de cellules.

**2.** Agencement de cellules de stockage d'énergie selon la revendication 1, dans lequel la pluralité de premiers circuits (106) sont des circuits de type inductif qui équilibrent l'énergie stockée entre les cellules du sous-ensemble respectif de cellules.

**3.** Agencement de cellules de stockage d'énergie selon la revendication 1, dans lequel la pluralité de premiers circuits (106) sont des circuits de type capacitif qui équilibrent l'énergie stockée entre les cellules du sous-ensemble respectif de cellules.

**4.** Agencement de cellules de stockage d'énergie selon la revendication 1, dans lequel chacun de la pluralité de premiers circuits (106) comprend :

un ensemble de premiers circuits secondaires (706), chaque circuit secondaire (706) de l'ensemble étant couplé à un autre sous-ensemble (702) respectif du sous-ensemble respectif de la pluralité de cellules correspondant au premier circuit, et chaque circuit secondaire (706) étant configuré pour transférer l'énergie entre les cellules de l'autre sous-ensemble (702) respectif pour équilibrer l'énergie stockée entre les cellules de l'autre sous-ensemble respectif ; et

un deuxième circuit secondaire (708) couplé à chacun des premiers circuits secondaires (706) et configuré pour transférer l'énergie entre les autres sous-ensembles de cellules pour équilibrer l'énergie stockée entre les autres sous-ensembles de cellules.

5. Agencement de cellules de stockage d'énergie selon la revendication 4, dans lequel :

les premiers circuits secondaires (706) sont un premier type de circuit qui équilibre l'énergie stockée entre les cellules ;
le deuxième circuit secondaire (708) est un deuxième type de circuit qui équilibre l'énergie stockée entre les autres sous-ensembles de cellules ; et
un type des premier et deuxième types de circuits d'équilibrage est un type capacitif, et l'autre type des premier et deuxième types est un type inductif.

6. Agencement de cellules de stockage d'énergie selon la revendication 4, dans lequel les premiers circuits secondaires (706) et le deuxième circuit secondaire (708) sont des circuits de type capacitif qui équilibrent l'énergie stockée entre les cellules.

7. Agencement de cellules de stockage d'énergie selon la revendication 4, dans lequel les premiers circuits secondaires (706) et le deuxième circuit secondaire (708) sont des circuits de type inductif qui équilibrent l'énergie stockée entre les cellules.

8. Agencement de cellules de stockage d'énergie selon la revendication 1, dans lequel chaque trajet résistif (112) couplé de manière commutable en parallèle avec l'un respectif des sous-ensembles (102) de la pluralité de cellules ne contient pas d'autres sous-ensembles sur le trajet résistif.

9. Module de batterie, comprenant un agencement de cellules de stockage d'énergie selon l'une quelconque des revendications précédentes, dans lequel le module de batterie est configuré pour recevoir un signal de commande d'un circuit de commande d'équilibrage externe couplé à une pluralité de modules de batterie similaires.

10. Module de batterie selon la revendication 9, dans lequel le circuit d'équilibrage de cellules est configuré pour générer le signal de commande en fonction de l'énergie stockée du module de batterie par rapport à l'énergie stockée d'un autre module similaire.

FIG. 1

FIG. 2

FIG. 3

EP 2 518 860 B1

FIG. 4

FIG. 5

FIG. 6

FIG. 7

FIG. 8

FIG. 9

FIG. 10

**EP 2 518 860 B1**

### Patent documents cited in the description

- US 20050269988 A
- US 7825638 B